# EUROPÄISCHE PATENTSCHRIFT

(11) **EP 1 080 538 B1**
(45) Veröffentlichungstag und Bekanntmachung des Hinweises auf die Patenterteilung: **17.07.2002**
(21) Anmeldenummer: 98919025.1
(22) Anmeldetag: 20.05.1998
(51) Int. Cl.: H04B 1/38, H04Q 7/32

(54) **VERFAHREN UND ENTSPRECHEND ANGEPASSTE VORRICHTUNGEN ZUR BEHANDLUNG VON PROGRAMMBEGLEITENDEN DIGITALEN DATEN AUS RADIOPROGRAMMEN**
METHOD AND CORRESPONDING DEVICES FOR PROCESSING DIGITAL DATA ACCOMPANYING AUDIO BROADCASTING PROGRAMS
PROCEDE ET DISPOSITIFS CORRESPONDANTS DESTINES AU TRAITEMENT DE DONNEES NUMERIQUES ISSUES DES PROGRAMMES RADIO ET ACCOMPAGNANT CES PROGRAMMES

(43) Veröffentlichungstag der Anmeldung: 07.03.2001
(73) Patentinhaber: Swisscom Mobile AG, 3050 Bern (CH)
(72) Erfinder: RITTER, Rudolf, CH-3052 Zollikofen (CH); RUPRECHT, Jürg, CH-3014 Bern (CH)
(74) Vertreter: Scheuzger, Beat Otto
(86) Internationale Anmeldenummer: CH9800210
(87) Internationale Veröffentlichungsnummer: WO9960712

(56) Entgegenhaltungen:
- WO-A-97/03534
- WO-A-97/44965
- US-A- 5 636 264

## Beschreibung

Die vorliegende Erfindung betrifft ein Verfahren und entsprechend angepasste Vorrichtungen zur Behandlung von programmbegleitenden digitalen Daten aus Radioprogrammen. Insbesondere betrifft die vorliegende Erfindung ein Erweiterungsmodul für Mobilfunktelefone, welches mit einem Mobilfunktelefon über eine elektrische Schnittstelle entfernbar verbunden werden kann, sowie ein Verfahren und eine entsprechend angepasste Chipkarte zur Behandlung von programmbegleitenden digitalen Daten aus Radioprogrammen, die von einem Radioempfänger empfangen werden.

Bekannte Erweiterungsmodule für Mobilfunktelefone dienen dazu ein Mobilfunktelefon mit zusätzlichen Batterien zu versehen, um damit die Betriebsdauer eines Mobilfunktelefons, unabhängig von einer externen Stromversorgung, zu verlängern. Ein solches Erweiterungsmodul, welches zusätzlich auch über ein Modem, eine CPU und Speicher zum Aufnehmen von Gesprächen und Nachrichten, sowie über ein Interface zum Aufnehmen einer Chipkarte mit abgespeicherten Telefonnummern verfügt, ist im Patentdokument US 5 490 202 beschrieben.

Ein anderes Erweiterungsmodul, welches im Patentdokument US 5 711 013 beschrieben ist, verfügt über Signalverarbeitungsfunktionen, beispielsweise Datenumformatierungsfunktionen, die wahlweise den Kommunikationsfunktionen des betreffenden Mobilfunktelefons zugeschaltet werden können.

Andere bekannte Erweiterungsmodule für Mobilfunktelefone dienen als Adapter um ein Mobilfunktelefon mit einer Basisstation, beispielsweise in einem Auto, zu verbinden, so dass mittels einem betreffenden Mobilfunktelefon Gespräche geführt werden können, ohne dass der Benutzer dabei seine Hände benützen muss. Ähnliche Adapter werden dazu verwendet ein Mobilfunktelefon mit dem Modem eines mobilen Computers zu verbinden, so dass dieser drahtlos Daten übertragen und empfangen kann. Ein Adapter für analoge oder digitale Mobilfunktelefone von verschiedenen Herstellern, der dazu dient diese Mobilfunktelefone mit einer externen Vorrichtung zu verbinden, ist in der Patentanmeldung WO 97/33384 beschrieben.

Im Dokument WO 97/03534 wird ein Erweiterungsmodul für Mobilfunktelefone beschrieben, welches einen Pager umfasst und einen Batteriesatz zur Speisung des Mobilfunktelefons und des Pagers enthält. Das Erweiterungsmodul gemäss WO 97/03534 kann Daten bidirektional über eine kontaktbehaftete Schnittstelle mit dem Mobilfunktelefon austauschen.

Es ist die Aufgabe dieser Erfindung ein neues Erweiterungsmodul für Mobilfunktelefone sowie ein entsprechendes neues Verfahren vorzuschlagen.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass das Erweiterungsmodul für Mobilfunktelefone, welches mit einem Mobilfunktelefon, zum Beispiel ein Mobilfunktelefon für ein GSM- oder ein UMTS-Netz, über eine externe, elektrische Schnittstelle, die ins Gehäuse des Erweiterungsmoduls, respektive ins Gehäuse des genannten Mobilfunktelefons integriert ist, entfernbar verbunden werden kann, einen Radioempfänger zum Empfang von Radioprogrammen umfasst, dass von diesem Radioempfänger empfangene Informationen, insbesondere programmbegleitende digitale Daten aus empfangenen Radioprogrammen, über die genannte Schnittstelle an das Mobilfunktelefon weitergeleitet werden und dass die programmbegleitenden digitalen Daten an eine mit dem Mobilfunktelefon entfernbar verbundene Chipkarte, zum Beispiel eine SIM-Karte, weitergeleitet werden. Dies hat den Vorteil, dass die Daten dort mittels Softwareprogrammen weiterbehandelt werden können.

Vorteilhafterweise können die programmbegleitenden digitalen Daten auf einem Display des Mobilfunktelefons dargestellt und, in einer Variante, mit Manipulationen, die mittels Bedienungselementen des Mobilfunktelefons gewählt werden, durchgeblättert werden. Dies hat den offensichtlichen Vorteil, dass Informationen nicht nur akustisch sondern auch visuell und interaktiv wahrgenommen werden können.

Vorzugsweise können die programmbegleitenden digitalen Daten mittels Bedienungselementen selektiert und durch vordefinierte Funktionen weiterbehandelt werden. Zum Beispiel können Daten in Abhängigkeit von den selektierten Daten mittels Kurzmeldungen, zum Beispiel SMS Kurzmeldungen, USSD Daten oder andere Datagramme, über ein Mobilnetz, zum Beispiel ein GSM- oder UMTS-Netz, an ein Dienstleistungszentrum übermittelt werden. Dies hat den Vorteil, dass dadurch die Einwegkommunikation des Radios auf eine Zweiwegkommunikation erweitert werden kann.

In einer Variante werden auch Audioprogramme an das Mobilfunktelefon weitergeleitet. Dies ermöglicht, dass Audioprogramme über den Lautsprecher des Mobilfunktelefons gehört werden können.

In einer Variante verfügt das Erweiterungsmodul über einen elektroakustischen Wandler, der mit dem Radioempfänger verbunden ist, beispielsweise über einen Lautsprecher, der in das Erweiterungsmodul integriert ist, oder über einen Kopfhörer, der an das Erweiterungsmodul angeschlossen ist.

In einer Variante können elektrische Signale vom Mobilfunktelefon über die Schnittstelle an den genannten elektroakustischen Wandler geleitet werden. Dies hat den Vorteil, dass über den gleichen elektroakustischen Wandler vom Radioempfänger empfangene Audioprogramme sowie vom Mobilfunktelefon empfangene Telefonate angehört werden können.

In einer Variante umfasst das Erweiterungsmodul mindestens ein Bedienungselement, mittels welchem ein Benutzer ein Signal über die Schnittstelle an das Mobilfunktelefon geben kann. Dies verbessert den Benutzerkomfort, indem zum Beispiel im Mobilfunktelefon Funktionen ausgelöst werden können, ohne dass dieses zur Hand genommen oder geöffnet werden muss, beispielsweise, wenn das Bedienungselement über ein Kabel mit dem Erweiterungsmodul verbunden ist.

In verschiedenen Varianten wird das Erweiterungsmodul über die Schnittstelle vom Mobilfunktelefon oder mittels einer eigenen Batterie gespeist. Die erste Variante hat den Vorteil, dass das Erweiterungsmodul kleiner dimensioniert werden kann. Die zweite Variante hat den Vorteil, dass das Erweiterungsmodul zur zusätzlichen Speisung des Mobilfunktelefons verwendet werden kann und die meist klein dimensionierte Batterie des Mobilfunktelefons nicht belastet.

Ein Vorteil der Erfindung besteht darin, dass diese angewendet werden kann, ohne dass zwingend Änderungen am bestehenden Mobilfunktelefon erforderlich sind. Das erfindungsgemässe Erweiterungsmodul sowie die entsprechend angepasste Chipkarte können vom Benutzer einfach mit dem Mobilfunktelefon verbunden, respektive in dieses eingeführt werden, womit das Mobilfunktelefon mit einem Radioempfänger zum Empfang von programmbegleitenden digitalen Daten ausgerüstet werden kann, ohne das bestehende Mobilfunktelefon ersetzen oder verändern zu müssen.

Nachfolgend wird eine Ausführung der vorliegenden Erfindung anhand eines Beispieles beschrieben. Das Beispiel der Ausführung wird durch die einzige beigelegte Figur illustriert, die
ein schematisches Blockdiagramm zeigt, welches ein Mobilfunktelefon mit Chipkarte, sowie ein damit verbundenes Erweiterungsmodul umfasst.

Die Referenznummer 1 bezieht sich auf ein Erweiterungsmodul, welches über eine externe, elektrische Schnittstelle 3 entfernbar mit einem Mobilfunktelefon 2 verbunden ist, zum Beispiel ein Mobilfunktelefon 2 für ein GSModer ein UMTS-Netz. Die elektrische Schnittstelle 3 ist ins Gehäuse des Erweiterungsmoduls 1, respektive ins Gehäuse des Mobilfunktelefons 2 integriert, so dass elektrische Kontakte des Erweiterungsmoduls 1 entfernbar mit elektrischen Kontakten des Mobilfunktelefons 2 verbunden werden können und dass das Erweiterungsmodul 1 und das Mobilfunktelefon 2 im verbundenen Zustand eine handliche Einheit bilden.

Gegenwärtig werden von verschiedenen Herstellern Mobilfunktelefone 2 mit unterschiedlichen Schnittstellen 3 angeboten, so dass das Erweiterungsmodul 1 entsprechend an diese unterschiedlichen Schnittstellen 3 angepasst werden muss. Dies kann beispielsweise so erreicht werden, dass verschiedene Varianten von Erweiterungsmodulen 1 gebaut und angeboten werden, die jeweils für ein bestimmtes Mobilfunktelefon 2 mit einer bestimmten Schnittstelle 3 geeignet sind und von einem Fachmann entsprechend konzipiert und entwickelt werden. Aus wirtschaftlichen Gründen wird dies vorteilhafterweise für diejenigen Mobilfunktelefone 2 gemacht, die eine Schnittstelle aufweisen, die zu den auf dem Markt verbreitetsten gehört. Eine andere Möglichkeit besteht darin, dass zur Anpassung an die unterschiedlichen Schnittstellen 3 der verschiedenen Mobilfunktelefone 2 ein Adapter benützt wird, welcher von einem Fachmann entsprechend konzipiert und entwickelt wird und entweder in das Erweiterungsmodul 1 integriert oder als separate Einheit zwischen das Mobilfunktelefon 2 und das Erweiterungsmodul 1 eingefügt wird. Adapter für den Zweck externe Vorrichtungen über die unterschiedlichen Schnittstellen 3 mit einem Mobilfunktelefon 2 zu verbinden sind in der oben erwähnten Patentanmeldung WO 97/33384 beschrieben worden. Für die serielle Datenübertragung über die Schnittstelle 3 ist beispielsweise für Mobilfunktelefone 2 für GSM-Netze vom European Telecommunications Standards Institute (ETSI) ein umfassendes Protokoll definiert worden, welches unter dem Namen "Terminal Equipment to Mobile Station (TE-MS) Multiplexer Protocol (GSM 07.10 Version 2.2.0)" publiziert wurde und beim ETSI Sekretariat, in F-06921 Sophia Antipolis Cedex, erhältlich ist.

Das Erweiterungsmodul 1 wird mit einem dem Fachmann bekannten analogen oder digitalen Radioempfänger 16, beispielsweise ein FM-Empfänger, zum Empfang von Radioprogrammen ausgestattet, welcher insbesondere auch programmbegleitende digitale Daten empfangen kann. Die Übertragung von programmbegleitenden Daten zusätzlich zum Radioprogramm wird vor allem im digitalen Radiosystem DAB (Digital Audio Broadcasting) oder in anderen Radiosystemen wie FM-SWIFT oder FM-DARC verwendet. Die DAB-Technologie, zum Beispiel, ermöglicht es, sowohl Radioprogramme als auch programmbegleitende Dienste (Program Associated Data, PAD) zu übertragen. Die Funktion eines Datendecoders kann dabei im genannten Radioempfänger 16 integriert sein. Die empfangenen programmbegleitenden digitalen Daten werden vom Erweiterungsmodul 1 über die Schnittstelle 3 an das Mobilfunktelefon 2 übertragen.

Zusätzliche Softwarefunktionen zur Manipulation der decodierten digitalen Daten können beispielsweise auf einer Chipkarte 21 implementiert werden, zum Beispiel eine SIM-Karte, die entfernbar mit dem Mobilfunktelefon 2 über eine Standardschnittstelle verbunden ist. Erfindungsgemäss verfügt die Chipkarte 21 über programmierte Softwarefunktionen, mittels welchen die erwähnten programmbegleitenden digitalen Daten über die Schnittstelle 3 entgegengenommen werden können.

In einer Variante wird auch das empfangene Audioprogramm vom Erweiterungsmodul 1 über die Schnittstelle 3 an das Mobilfunktelefon 2 weitergeleitet, wo es beispielsweise auf den ins Mobilfunktelefon 2 integrierten Lautsprecher übertragen wird.

Das Erweiterungsmodul 1 verfügt zudem vorteilhafterweise über mindestens einen elektroakustischen Wandler 11, 15, beispielsweise ein Lautsprecher 15, der in bekannter Weise direkt in das Erweiterungsmodul 1 eingebaut ist. In einer anderen Variante verfügt er zudem, oder an dessen Stelle, über einen Kopfhörer 11, der mit einem Kabel 13 an das Erweiterungsmodul 1 angeschlossen ist, über eine fest verbundene oder entfernbare Verbindung 14, beispielsweise eine handelsübliche Kopfhörerbuchse 14. In der entfernbaren Variante, kann der Lautsprecher, falls vorhanden, durch Anschliessen des Kopfhörers automatisch ausgeschaltet werden. Für zusätzlichen Benutzerkomfort kann der Kopfhörer zudem mit einem Bedienungselement 12 versehen werden, welches zum Beispiel zur Einstellung der Lautstärke und zum Abstimmen der Empfangsfrequenz dient. Zusätzlich oder an Stelle dieses Bedienungselementes 12 können entsprechende Bedienungselemente ins Gehäuse des Erweiterungsmoduls 1 integriert werden.

Die Antenne des Radioempfängers 16 im Erweiterungsmodul 1 ist beispielsweise mittels dem Kabel 13 des Kopfhörers realisiert oder innerhalb des Gehäuses des Erweiterungsmoduls 1 durch dem Fachmann bekannte Mittel implementiert.

In einer Ausführungsvariante können elektrische Signale vom Mobilfunktelefon 2 über die Schnittstelle 3 an den genannten elektroakustischen Wandler 11, 15 geleitet werden. Dies hat den Vorteil, dass ankommende Telefongespräche zum Beispiel auf den Kopfhörer übertragen werden können, wenn der Benutzer mit diesem ein Radioprogramm anhört. Es kann von Vorteil sein, wenn der Benutzer den Radioempfänger 16 als Signalquelle für den elektroakustischen Wandler 11, 15 wahlweise ausschalten kann, so dass er ein ankommendes Telefongespräch ungestört, beispielsweise über den Kopfhörer, anhören kann. Ein solcher Wählschalter kann zum Beispiel in das Bedienungselement 12 integriert werden, was eine zusätzliche Leitung auf dem Kabel 13 und der Anschlussbuchse 14 benötigt, oder er kann in das Erweiterungsmodul 1 integriert werden. Im letzteren Fall kann der Wählschalter auch dazu benutzt werden bei Bedarf den Lautsprecher 15 des Erweiterungsmoduls 1 auszuschalten, falls ein solcher vorhanden ist. Die vom Mobilfunktelefon 2 über die Schnittstelle 3 an den genannten elektroakustischen Wandler 11, 15 geleiteten elektrischen Signale können ohne Änderungen des Mobilfunktelefon 2 an der Schnittstelle 3 verfügbar sein. Es kann aber auch vorteilhaft sein, dass die Chipkarte 21 mit Softwarefunktionen programmiert wird, die erlauben elektrische Signale über die Schnittstelle 3 an den elektroakustischen Wandler 11, 15 zu leiten.

In einer Variante ist es möglich mittels einem Signalgeber vom Erweiterungsmodul 1 ein elektrisches Signal über die Schnittstelle 3 an das Mobilfunktelefon 2 zu übertragen. Der Signalgeber kann beispielsweise ein Schaltknopf sein, der zum Beispiel in das Bedienungselement 12 integriert ist, was eine zusätzliche Leitung auf dem Kabel 13 und der Anschlussbuchse 14 benötigt, oder er kann in das Erweiterungsmodul 1 integriert werden. Durch einen entsprechenden programmierten Softwareprozess in der Chipkarte 21 kann ein solches Signal von der Chipkarte 21 entgegengenommen werden und als Startsignal für vordefinierte Verfahrensschritte, das heisst vordefinierte Softwarefunktionen, verwendet werden. Ein gleichwertiges Startsignal kann zum Beispiel vom Benutzer auch mittels der Bedienungselemente 22 des Mobilfunktelefons 2, zum Beispiel mittels einer bestimmten vordefinierten Taste eingegeben und von der erwähnten Softwarefunktion entgegengenommen werden.

In einer weiteren Ausführungsvariante können auch mehrere Signalgeber vorgesehen werden, die beispielsweise unterschiedlich geformt oder gekennzeichnet sein können und die verschiedene elektrische Signale vom Erweiterungsmodul 1 über die Schnittstelle 3 an das Mobilfunktelefon 2 senden können. Entsprechend den verschiedenen Signalen kann der empfangende programmierte Softwareprozess in der Chipkarte 21 verschiedene vordefinierte Softwarefunktionen aufstarten.

Ein konkretes Beispiel für eine Softwarefunktion, die vorteilhafterweise vom Bedienungselement 12 gestartet wird, ist das Beantworten eines ankommenden Telefonanrufes, wenn der Benutzer den Kopfhörer benutzt um Radioprogramme und gleichzeitig auch Telefonate zu hören. Der Softwareprozess, der das Startsignal vom Signalgeber entgegennimmt, kann so programmiert werden, dass er das ankommende Telefongespräch beantwortet, das heisst entgegennimmt, und das Telefongespräch über den Kopfhörer hörbar macht, wenn das Bedienungselement 12 betätigt wird während ein Telefonanruf ankommt.

Ein Startsignal kann zudem beispielsweise in der Chipkarte 21 einen Softwareprozess auslösen, der die vom Radioempfänger 16 zuletzt empfangenen programmbegleitenden digitalen Daten entgegennimmt und entsprechend und/oder in Abhängigkeit der Datenwerte eine Kurzmeldung abfasst und diese mittels der Kommunikationsfunktionen des Mobilfunktelefons 2 an ein Dienstleistungszentrum übermittelt. Je nach Ausführung kann das Erweiterungsmodul 1 mit Speichermitteln ausgerüstet werden um empfangene Daten beispielsweise für eine gewisse Zeit zwischenzuspeichern. In einer Variante werden die vom Radioempfänger 16 empfangenen programmbegleitenden digitalen Daten von einem entsprechend programmierten Softwareprozess in der Chipkarte 21 laufend entgegengenommen, so dass sich der entsprechende, oben beschriebene Schritt erübrigt. Die empfangenen programmbegleitenden digitalen Daten enthalten zum Beispiel eine Identifikation von Produkten oder Dienstleistungen, z. B. die Belieferung mit bestimmten Informationen, sowie die Identifikation eines Dienstleistungszentrums, welches Bestellungen für diese Produkte entgegennimmt. Die empfangenen Daten begleiten beispielsweise ein Audioprogramm, in welchem ein Kommentator die Zuhörer auffordert den Signalgeber zu betätigen, falls sie ein bestimmtes Produkt, welches zum Beispiel gerade in einer Werbung vorgestellt wurde, bestellen möchten. Um einer irrtümlichen Eingabe einer Bestellung vorzubeugen können natürlich zusätzliche Bestätigungsschritte eingebaut werden, auf die hier nicht näher eingegangen werden soll. Das Mobilfunktelefon 2 kann beispielsweise ein GSM- oder ein UMTS-Gerät sein, über welches der Softwareprozess in der Chipkarte 21 die Produktebestellung beispielsweise in Kurzmeldungen, zum Beispiel SMS Kurzmeldungen, USSD Daten oder andere Datagramme, über ein Mobilnetz, zum Beispiel ein GSM- oder UMTS-Netz, an das Dienstleistungszentrum übermittelt Die Übermittlung und Behandlung der Daten in Kurzmeldungen an das und im Dienstleistungszentrum erfolgt beispielsweise gemäss dem SICAP Verfahren, welches unter anderem in EP 689 368 beschriebenen worden ist, gemäss einem ähnlichen Verfahren oder basierend auf WAP (Wireless Application Protocol). Ein Bestellverfahren für Produkte oder Informationen für ein Mobilfunktelefon 2, welches beispielsweise hier angewendet werden kann, wird in der Patentanmeldung PCT/CH96/00464 (WO 98/28900) beschrieben.

Es kann auch vorgesehen sein, dass der Softwareprozess jeweils automatisch durch den Empfang von programmbegleitenden digitalen Daten, oder einem darin enthaltenen speziellen Code gestartet wird. Es kann auch möglich sein ein solches automatisches Aufstarten des Softwareprozesses durch den Benutzer als Optionsparameter setzen zu lassen, beispielsweise durch Entgegennahme eines entsprechenden Befehls über eine Softwarefunktion und durch Abspeichern des eingegebenen Optionsparameters in der Chipkarte 21.

In einer anderen Variante werden die programmbegleitenden digitalen Daten, welche vom in der Chipkarte 21 aufgestarteten oder einem laufenden Softwareprozess entgegengenommen wurden, zunächst auf dem Display 23 des Mobilfunktelefons 2 dargestellt. Dabei kann es sich um ganze Datensätze handeln, welche beispielsweise vom Benutzer mittels der Bedienungselemente 22 des Mobilfunktelefons 2 selektiert und durchblättert werden können. Dies wird durch entsprechende programmierte Funktionen des Softwareprozesses in der Chipkarte 21 erreicht, welche die Datendarstellung sowie die Entgegennahme der mittels Bedienungselemente 22 eingegebenen Befehle steuern und entsprechend den eingegebenen Befehlen vordefinierte programmierte Funktionen ausführen. Dabei können bestimmte Tasten der Bedienungselemente 22 und/oder 12 als Funktionstasten definiert werden und/oder durch Navigation mittels Cursortasten bestimmte Optionen aus Menus gewählt werden. Die Anwendungsmöglichkeiten sind nahezu unbegrenzt, vor allem auch deshalb weil nicht nur vordefinierte programmierte Funktionen ausgeführt werden können, sondern weil die empfangenen und vom Softwareprozess der Chipkarte 21 entgegengenommenen programmbegleitenden digitalen Daten auch ausführbare Programme enthalten können, zum Beispiel Java Applets, welche auf der Chipkarte 21 ausgeführt werden können. Die durch die vordefinierten Funktionen selektierten Daten und/oder Resultate von ausgeführten vordefinierten Funktionen oder empfangenen Programmen können, wie oben beschrieben, beispielsweise mittels Kurzmeldungen, zum Beispiel SMS Kurzmeldungen, USSD Daten oder andere Datagramme, über ein Mobilnetz, zum Beispiel ein GSM- oder UMTS-Netz, an Dienstleistungszentren übermittelt werden. Wie oben beschrieben erfolgt die Übermittlung und Behandlung der Daten in Kurzmeldungen an das und im Dienstleistungszentrum beispielsweise gemäss dem SICAP Verfahren, welches unter anderem in EP 689 368 beschriebenen worden ist, gemäss einem ähnlichen Verfahren oder basierend auf WAP (Wireless Application Protocol). Wenn der Fachmann Änderungen am Mobilfunktelefon 2 vornehmen möchte, kann er beispielsweise auch entscheiden gewisse Softwarefunktionen anstatt auf der Chipkarte 21 im Mobilfunktelefon 2 zu implementieren und/oder auszuführen, allerdings bleibt die Chipkarte 21 das steuernde und/oder auslösende Element und hat gegebenenfalls bezüglich im Mobilfunktelefon 2 implementierten und/oder ausgeführten Softwarefunktionen eine Master-Funktion. Auch im Dienstleistungszentrum sind die Anwendungsmöglichkeiten natürlich unbegrenzt, beispielsweise können die empfangenen Daten abgespeichert, gesammelt und an eine interessierte Partei weitergeleitet oder verkauft werden, wobei die eigentliche Anwendung zum Beispiel ein Spiel, ein Wettbewerb oder eine Meinungsumfrage ist. Natürlich kann es sich, wie schon oben erwähnt, um Produkte- oder Dienstleistungsbestellungen handeln, wobei das Dienstleistungszentrum die eingegangenen Bestellungen oder Anmeldungen vorteilhafterweise nochmals vom Benutzer bestätigen lässt und eine bestätigte Bestellung oder Anmeldung ausführt oder an ein weiteres zuständiges Dienstleistungszentrum weiterleitet.

Um gegebenenfalls empfangene Daten zu entschlüsseln und um zu sendende Daten zu verschlüsseln und zu signieren wird die Chipkarte zusätzlich mit entsprechenden programmierten Softwarefunktionen ausgestattet. Als Verschlüsselungsverfahren kann beispielsweise das TTP-Verfahren (Trusted Third Party) oder ein PTP-Verfahren (Point-to-Point) eingesetzt werden.

In verschiedenen Varianten kann das Erweiterungsmodul 1 über die Schnittstelle 3 direkt vom Mobilfunktelefon 2 gespiesen werden oder es kann mit einer eigenen, eventuell aufladbaren, Batteriespeisung versehen werden. Erstere Variante ermöglicht es das Erweiterungsmodul 1 klein zu dimensionieren, hat aber den Nachteil, dass dadurch die Batterien des Mobilfunktelefons 2 zusätzlich belastet werden. Die letztere Variante hat natürlich den Vorteil, dass das Erweiterungsmodul 1 auch als zusätzliche Energiequelle für das Mobilfunktelefon 2 dienen kann.

Obwohl dies bis anhin nicht erwähnt wurde ist es auch möglich anstelle von, oder zusätzlich zum Radioempfänger 16 einen Tuner für Femsehsignale im Erweiterungsmodul 1 zu integrieren, wobei auch ein kleines Video Display, wie es bereits aus mobilen Videotelefonen bekannt ist, in das Erweiterungsmodul integriert oder ein bereits im Mobilfunktelefon 2 vorhandenes Videodisplay zur Darstellung des Videosignales benutzt werden kann. Programmbegleitende digitale Daten, zum Beispiel der bekannte Teletext, werden nämlich auch Fernsehprogrammen hinzugefügt, beispielsweise werden solche Daten während des vertikalen Rasterintervalls übertragen und können vom Tuner empfangen und mit entsprechenden Decoderfunktionen decodiert werden.

Wie bereits erwähnt sind die Anwendungsmöglichkeiten der beschriebenen Erfindung fast grenzenlos und keinesfalls nur auf die gegebenen Beispiele limitiert.

Obwohl nur beschrieben wurde, dass das Erweiterungsmodul 1 über eine externe elektrische Schnittstelle 3 entfernbar mit dem Mobilfunktelefon 2 verbunden wird, könnte die externe Schnittstelle 3, insbesondere für den Transfer der programmbegleitenden digitalen Daten, durchaus als elektromagnetische Schnittstelle, als Infrarotschnittstelle oder mittels Optokoppler realisiert werden.

Es ist auch möglich das Erweiterungsmodul 1 weiter auszubauen und nicht bloss einen Kopfhörer sondern gleich auch ein Mikrofon miteinzubeziehen, so dass mittels einem handelsüblichen Kopfhörer-Mikrofonset bequem Radioprogramme gehört und auch ankommende Telefonate erledigt werden können, ohne das Mobilfunktelefon zur Hand nehmen zu müssen.

Um die Ausbaufähigkeit und die Einsatzmöglichkeiten des Mobilfunktelefons 2 nicht zu beeinträchtigen kann das Erweiterungsmodul 1 in einer Variante seinerseits mit einer externen, ins Gehäuse des Erweiterungsmoduls 1 integrierten, elektrischen Schnittstelle 3' ausgerüstet werden, welche der elektrischen Schnittstelle 3 des Mobilfunktelefons 2 entspricht und mit dieser verbunden ist, wenn das Erweiterungsmodul 1 über die elektrische Schnittstelle 3 an das Mobilfunktelefon 2 angeschlossen ist. Dies hat den Vorteil, dass zusätzliche andere Erweiterungsmodule oder Adapter über diese zusätzliche elektrische Schnittstelle 3' mit dem Mobilfunktelefon 2 verbunden werden können, auch wenn das beschriebene Erweiterungsmodul 1 bereits über die elektrische Schnittstelle 3 an das Mobilfunktelefon 2 angeschlossen ist.

Neben dem Erweiterungsmodul 1 kann einem interessierten Benutzer auch eine Chipkarte 21 mit der beschriebenen Software verkauft werden oder es kann ihm ein entsprechendes Softwaremodul auf seine Chipkarte 21 geladen werden.

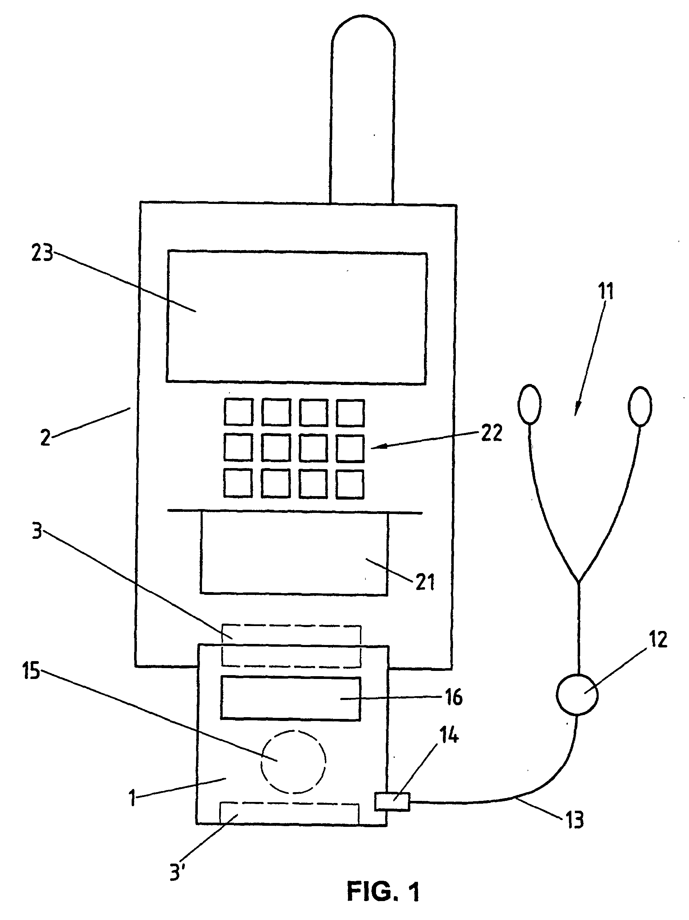

## Patentansprüche

1. Vorrichtungsanordnung umfassend: ein Mobilfunktelefon (2) sowie ein Erweiterungsmodul (1) für Mobilfunktelefone (2), welches mit dem genannten Mobilfunktelefon (2) entfernbar über eine externe, ins Gehäuse des Erweiterungsmoduls (1), respektive ins Gehäuse des genannten Möbilfunktelefons (2) integrierte, elektrische Schnittstelle (3) verbindbar ist, **dadurch gekennzeichnet,**
**dass** das Erweiterungsmodul (1) einen Radioempfänger (16) zum Empfang von Radioprogrammen umfasst,
**dass** vom genannten Radioempfänger (16) empfangene Informationen über die genannte Schnittstelle (3) an das genannte Mobilfunktelefon (2) weiterleitbar sind,
**dass** mindestens gewisse der genannten empfangenen Informationen programmbegleitende digitale Daten sind, und
**dass** mit dem Mobilfunktelefon (2) eine Chipkarte (21) entfernbar verbunden ist, welche Chipkarte (21) programmierte Softwarefunktionen umfasst, mittels welchen die genannten programmbegleitenden digitalen Daten über die Schnittstelle (3) in die Chipkarte (21) entgegennehmbar sind.

2. Vorrichtungsanordnung gemäss vorhergehendem Anspruch, **dadurch gekennzeichnet, dass** der genannte Radioempfänger (16) so eingerichtet ist, dass er Radioprogramme mit programmbegleitenden digitalen Daten empfangen kann.

3. Vorrichtungsanordnung gemäss einem der vorhergehenden Ansprüche, **dadurch gekennzeichnet, dass** mindestens gewisse der genannten empfangenen Informationen Audioprogramme sind.

4. Vorrichtungsanordnung gemäss einem der vorhergehenden Ansprüche, **dadurch gekennzeichnet, dass** das Erweiterungsmodul (1) mindestens einen elektroakustischen Wandler (11, 15) umfasst, der mit dem genannten Radioempfänger (16) verbunden ist, und dass elektrische Signale vom genannten Mobilfunktelefon (2) über die genannte Schnittstelle (3) an den genannten mindestens einen elektroakustischen Wandler (11, 15) leitbar sind.

5. Vorrichtungsanordnung gemäss einem der vorhergehenden Ansprüche, **dadurch gekennzeichnet, dass** das Erweiterungsmodul (1) mindestens ein Bedienungselement (12) umfasst, mittels welchem ein Benutzer ein Signal über die genannte Schnittstelle (3) an das genannte Mobilfunktelefon (2) geben kann.

6. Vorrichtungsanordnung gemäss einem der vorhergehenden Ansprüche, **dadurch gekennzeichnet, dass** das Erweiterungsmodul (1) über die genannte Schnittstelle (3) vom genannten Mobilfunktelefon (2) gespeist wird oder dass das Erweiterungsmodul (1) eine eigene Batteriespeisung umfasst.

7. Vorrichtungsanordnung gemäss einem der vorhergehenden Ansprüche, **dadurch gekennzeichnet, dass** das Erweiterungsmodul (1) zusätzlich über eine externe, ins Gehäuse des Erweiterungsmoduls (1) integrierte, elektrische Schnittstelle (3') verfügt, welche der ins Gehäuse des genannten Mobilfunktelefons (2) integrierten, elektrischen Schnittstelle (3) entspricht und mit dieser verbunden ist, wenn das Erweiterungsmodul (1) über die genannte elektrische Schnittstelle (3) mit dem genannten Mobilfunktelefon (2) verbunden ist

8. Vorrichtungsanordnung gemäss einem der vorhergehenden Ansprüche, **dadurch gekennzeichnet, dass** die Chipkarte (21) programmierte Mittel umfasst, um elektrische Signale über die elektrische Schnittstelle (3) entgegenzunehmen, und dass die Chipkarte (21) zusätzliche programmierte Mittel umfasst, um auf Grund eines entgegengenommenen genannten Signals vordefinierte programmierte Softwarefunktionen aufzustarten.

9. Vorrichtungsanordnung gemäss einem der vorhergehenden Ansprüche, **dadurch gekennzeichnet, dass** die Chipkarte (21) eine programmierte Softwarefunktion umfasst, mittels welcher ein im genannten Mobilfunktelefon (2) ankommender Telefonanruf entgegennehmbar und über die genannte elektrische Schnittstelle (3) auf einen elektroakustischen Wandler (11, 15) im genannten Erweiterungsmodul (1) leitbar ist

10. Vorrichtungsanordnung gemäss einem der vorhergehenden Ansprüche, **dadurch gekennzeichnet, dass** die Chipkarte (21) eine programmierte Softwarefunktion umfasst, mittels welcher programmbegleitende digitale Daten, welche vom Radioempfänger (16) empfangen werden, über die genannte elektrische Schnittstelle (3) entgegennehmbar und Daten in Abhängigkeit von diesen entgegengenommenen Daten mittels Kurzmeldungen über ein Mobilnetz an ein Dienstleistungszentrum übermittelbar sind.

11. Verfahren zur Behandlung von programmbegleitenden digitalen Daten aus Radioprogrammen, die von einem Radioempfänger (16) empfangen werden; **dadurch gekennzeichnet,**
**dass** die genannten Daten über eine elektrische Schnittstelle (3), mit welcher der genannte Radioempfänger (16) entfernbar mit einem Mobilfunktelefon (2) verbunden ist, an das Mobilfunktelefon (2) weitergeleitet werden,
**dass** die genannten Daten mittels programmierter Softwarefunktionen einer Chipkarte (21), die entfernbar mit dem Mobilfunktelefon verbunden ist, über die Schnittstelle (3) in die Chipkarte (21) entgegengenommen werden.

12. Verfahren gemäss vorhergehendem Anspruch, **dadurch gekennzeichnet, dass** die genannten Daten auf einem Display (23) des genannten Mobilfunktelefons (2) dargestellt werden, und dass die dargestellten Daten mit Manipulationen, die mittels Bedienungselementen (22) des genannten Mobilfunktelefons (2) gewählt werden, durchgeblättert werden.

13. Verfahren gemäss einem der Ansprüche 11 bis 12, **dadurch gekennzeichnet, dass** die genannten Daten mittels Bedienungselementen (12, 22) selektiert und durch vordefinierte Funktionen weiterbehandelt werden.

14. Verfahren gemäss vorhergehendem Anspruch, **dadurch gekennzeichnet, dass** Daten in Abhängigkeit von den selektierten Daten mittels Kurzmeldungen über ein Mobilnetz an ein Dienstleistungszentrum übermittelt werden.

15. Verfahren gemäss einem der Ansprüche 11 bis 14, **dadurch gekennzeichnet, dass** es mittels Bedienungselementen (22) des genannten Mobilfunktelefons (2) oder mittels eines Signals, das über die genannte Schnittstelle (3) empfangen wird, gestartet wird.

16. Verfahren gemäss einem der Ansprüche 11 bis 15, **dadurch gekennzeichnet, dass** ein Benutzer des Mobilfunktelefons (2) durch Betätigen von bestimmten Bedienungselementen (12, 22) eine Bestellung einleitet, wobei Daten in Abhängigkeit von gewissen der empfangenen genannten programmbegleitenden digitalen Daten, die eine Identifikation eines Dienstleistungszentrums sowie eine Produkte- oder Dienstleistungsidentifikation umfassen, mittels Kurzmeldungen über ein Mobilnetz an das Dienstleistungszentrum gesandt werden.

## Claims

1. Device configuration comprising: a mobile radio telephone (2) as well as an extension module (1) for mobile radio telephones (2), which is removably connectible to the said mobile radio telephone (2) via an external electrical interface (3) integrated into the housing of the extension module (1) or respectively into the housing of the said mobile radio telephone (2), **characterised**
**in that** the extension module (1) comprises a radio receiver (16) for reception of radio programs,
**in that** pieces of information received by the said radio receiver (16) are able to be passed on to the said mobile radio telephone (2) via the said interface (3),
**in that** at least certain of the said received pieces of information are program-accompanying digital data, and
**in that** a chipcard (21) is removably connected to the mobile radio telephone (2), which chipcard (21) comprises programmed software functions by means of which the said program-accompanying digital data are receivable in the chipcard (21) via the interface (3).

2. Device configuration according to the preceding claim, **characterised in that** the said radio receiver (16) is set up such that it is able to receive radio programs with program-accompanying digital data.

3. Device configuration according to one of the preceding claims, **characterised in that** at least certain of the said received pieces of information are audio programs.

4. Device configuration according to one of the preceding claims, **characterised in that** the extension module (1) comprises at least one electro-acoustical converter (11, 15), which is connected to the said radio receiver (16), and **in that** electrical signals are conductible from the said mobile radio telephone (2) via the said interface (3) to the said at least one electro-acoustical converter (11, 15).

5. Device configuration according to one of the preceding claims, **characterised in that** the extension module (1) comprises at least one operating element (12) by means of which a user is able to give a signal to the said mobile radio telephone (2) via the said interface (3).

6. Device configuration according to one of the preceding claims, **characterised in that** the extension module (1) is fed by the said mobile radio telephone (2) via the said interface (3) or **in that** the extension module (1) includes its own battery supply.

7. Device configuration according to one of the preceding claims, **characterised in that** the extension module (1) has in addition an external electrical interface (3') integrated into the housing of the extension module (1) which corresponds to the electrical interface (3) integrated into the housing of the said mobile radio telephone (2) and is connected thereto when the extension module (1) is connected to the said mobile radio telephone (2) via the said electrical interface (3).

8. Device configuration according to one of the preceding claims, **characterised in that** the chipcard (21) comprises programmed means for receiving electrical signals via the electrical interface (3) and **in that** the chipcard (21) comprises in addition programmed means of starting predefined programmed software functions on the basis of a received said signal.

9. Device configuration according to one of the preceding claims, **characterised in that** the chipcard (21) comprises a programmed software function by means of which a telephone call arriving in the said mobile radio telephone (2) is receivable and is conductible via the said electrical interface (3) to an electro-acoustical converter (11, 15) in the said extension module (1).

10. Device configuration according to one of the preceding claims, **characterised in that** the chipcard (21) comprises a programmed software function by means of which program-accompanying digital data that are received by the radio receiver (16) are receivable via the said electrical interface (3) and data based on these received data are transmittable to a service centre by means of short messages over a mobile network.

11. Method for handling program-accompanying digital data from radio programs which are received by a radio receiver (16), **characterised**
**in that** the said data are passed on to a mobile radio telephone (2) via an electrical interface (3) with which the said radio receiver (16) is removably connected to the mobile radio telephone (2),
**in that** the said data are received via the interface (3) in a chipcard (21) by means of programmed software functions of the chipcard (21) which is removably connected to the mobile radio telephone (2).

12. Method according to the preceding claim, **characterised in that** the said data are shown on a display (23) of the said mobile radio telephone (2), and **in that** the displayed data are able to be browsed through with manipulations which are selected by means of operating elements (22) of the said mobile radio telephone (2).

13. Method according to one of the claims 11 to 12, **characterised in that** the said data are selected by means of operating elements (12, 22) and are further processed through predefined functions.

14. Method according to the preceding claim, **characterised in that** data based on the selected data are transmitted to a service centre by means of short messages over a mobile network.

15. Method according to one of the claims 11 to 14, **characterised in that** it is started by means of operating elements (22) of the said mobile radio telephone (2) or by means of a signal which is received over the said interface (3).

16. Method according to one of the claims 11 to 15, **characterised in that** a user of the mobile radio telephone (2) initiates an order through actuation of certain operating elements (12, 22), data based on certain of the received said program-accompanying digital data, which comprise an identification of a service centre as well as a product or service identification, being sent to the service centre by means of short messages over a mobile network.

## Revendications

1. Dispositif comprenant un téléphone mobile (2) et un module d'extension (1) pour téléphones mobiles (2), pouvant être relié à ce téléphone mobile (2) de manière séparable grâce à une interface électrique (3) extérieure intégrée dans le boîtier du module d'extension (1) ou dans le boîtier du téléphone mobile (2), **caractérisé en ce**
**que** le module d'extension (1) comprend un récepteur radiophonique (16) destiné à la réception de programmes de radiodiffusion,
**que** les informations reçues par le récepteur radiophonique (16) peuvent être transmises au téléphone mobile (2) par l'intermédiaire de l'interface (3),
**qu'**au moins certaines des informations reçues mentionnées sont des données numériques accompagnant des programmes, et
**qu'**une carte à puce (21) est reliée de manière amovible au téléphone mobile (2), cette carte à puce (21) comportant des fonctions programmables de logiciels au moyen desquelles les données numériques accompagnant des programmes peuvent être reçues par la carte à puce (21) par l'intermédiaire de l'interface (3).

2. Dispositif selon la revendication précédente, **caractérisé en ce que** le récepteur radiophonique (16) est conçu de manière à pouvoir recevoir des programmes radiophoniques comportant des données numériques accompagnant des programmes.

3. Dispositif selon l'une des revendications précédentes, **caractérisé en ce qu'**au moins certaines des informations reçues sont des programmes audio.

4. Dispositif selon l'une des revendications précédentes, **caractérisé en ce que** le module d'extension (1) comprend un ou plusieurs convertisseurs électroacoustiques (11, 15) reliés au récepteur radiophonique (16), et **en ce que** des signaux électriques peuvent être amenés du téléphone mobile (2) au(x) convertisseur(s) électroacoustique(s) (11, 15) en passant par l'interface (3).

5. Dispositif selon l'une des revendications précédentes, **caractérisé en ce que** le module d'extension (1) comprend au moins un organe de commande (12) au moyen duquel un utilisateur peut envoyer un signal au téléphone mobile (2) par l'intermédiaire de l'interface (3).

6. Dispositif selon l'une des revendications précédentes, **caractérisé en ce que** le module d'extension (1) est alimenté par le téléphone mobile (2) par l'intermédiaire de l'interface (3), ou **en ce que** le module d'extension (1) possède sa propre alimentation par accumulateur.

7. Dispositif selon l'une des revendications précédentes, **caractérisé en ce que** le module d'extension (1) possède en plus une interface électrique (3') extérieure intégrée dans son boîtier et qui correspond à l'interface électrique (3) intégrée dans le boîtier du téléphone mobile (2) et lui est reliée quand le module d'extension (1) est relié au téléphone mobile (2) par l'intermédiaire de l'interface électrique (3).

8. Dispositif selon l'une des revendications précédentes, **caractérisé en ce que** la carte à puce (21) comprend des moyens programmés servant à recevoir des signaux électriques par l'intermédiaire de l'interface électrique (3), et **en ce que** la carte à puce (21) comprend des moyens programmés supplémentaires destinés à lancer des fonctions de logiciels programmées, définies à l'avance, à la suite de la réception d'un signal mentionné.

9. Dispositif selon l'une des revendications précédentes, **caractérisé en ce que** la carte à puce (21) comprend une fonction de logiciel programmée au moyen de laquelle un appel téléphonique parvenant au téléphone mobile (2) peut être reçu et amené, par l'intermédiaire de l'interface électrique (3), à un convertisseur électroacoustique (11, 15) se trouvant dans le module d'extension (1).

10. Dispositif selon l'une des revendications précédentes, **caractérisé en ce que** la carte à puce (21) comprend une fonction de logiciel programmée au moyen de laquelle des données numériques d'accompagnement de programmes qui sont reçues par le récepteur radiophonique (16) peuvent être reçues par l'interface électrique (3) et que des données peuvent être transmises à un centre de prestations de services, en fonction de ces données reçues, au moyen de messages courts, par l'intermédiaire d'un réseau de téléphonie mobile.

11. Procédé de traitement de données numériques d'accompagnement de programmes, provenant de programmes radiophoniques reçus par un récepteur radiophonique (16), **caractérisé en ce**
**que** les données mentionnées sont transmises à un téléphone mobile (2) par l'intermédiaire d'une interface électrique (3) qui relie de manière séparable le récepteur radiophonique (16) à ce téléphone mobile (2),
**que** les données mentionnées sont reçues dans une carte à puce (21) au moyen de fonctions programmables de logiciels de cette carte à puce (21) qui est reliée au téléphone mobile de manière séparable, par l'intermédiaire de l'interface (3).

12. Procédé selon la revendication précédente, **caractérisé en ce que** les données mentionnées sont affichées sur un écran (23) du téléphone mobile (2) et **en ce que** les données représentées sont parcourues avec des manipulations choisies au moyen d'éléments de commande (22) du téléphone mobile (2).

13. Procédé selon la revendication 11 ou 12, **caractérisé en ce que** les données mentionnées sont sélectionnées au moyen d'éléments de commande (12, 22) et traitées par des fonctions définies à l'avance.

14. Procédé selon la revendication précédente, **caractérisé en ce que** des données sont transmises, en fonction des données sélectionnées, à un centre de prestations de services, au moyen de messages courts, par l'intermédiaire d'un réseau de téléphonie mobile.

15. Procédé selon l'une des revendications 11 à 14, **caractérisé en ce qu'**il est lancé au moyen d'organes de commande (22) du téléphone mobile (2) ou au moyen d'un signal reçu par l'intermédiaire de l'interface (3).

16. Procédé selon l'une des revendications 11 à 15, **caractérisé en ce qu'**un utilisateur du téléphone mobile (2) lance un ordre d'achat en actionnant certains organes de commande (12, 22), des données étant envoyées au centre de prestations de services, en fonction de certaines des données numériques d'accompagnement de programmes qui ont été reçues et qui permettent d'identifier un centre de prestations de services ainsi que des produits ou des prestations de services, au moyen de messages courts passant par un réseau de téléphonie mobile.
